# EUROPÄISCHE PATENTSCHRIFT

(11) **EP 1 288 452 B1**
(45) Veröffentlichungstag und Bekanntmachung des Hinweises auf die Patenterteilung: **19.05.2004**
(21) Anmeldenummer: 02017846.3
(22) Anmeldetag: 08.08.2002
(51) Int. Cl.: F01L 13/00, F02M 61/18

(54) **Verfahren zur Gemischbildung bei einer direkt einspritzenden, fremdgezündeten Brennkraftmaschine**
Method for producing a mixture for a direct-injection spark-ignition combustion engine
Procédé pour préparer un mélange dans un moteur à combustion interne avec injection directe et allumage controlé

(30) Priorität: 01.09.2001 DE 10143026
(43) Veröffentlichungstag der Anmeldung: 05.03.2003
(73) Patentinhaber: Bayerische Motoren Werke Aktiengesellschaft, 80809 München (DE)
(72) Erfinder: Eichlseder, Helmut, Dr., Universitätsprofessor, 8010 Graz (AT); Klauer, Norbert, 85778 Haimhausen (DE); Baumann, Eckard, 86919 Utting am Ammersee (DE); Mährle, Werner, 85293 Reichertshausen (DE)

(56) Entgegenhaltungen:
- EP-A- 0 854 280
- US-A- 5 211 340
- US-A- 5 724 927
- US-A- 6 055 948
- US-A- 6 058 348

## Beschreibung

Die Erfindung bezieht sich nach dem Oberbegriff des Patentanspruches 1 auf ein Verfahren zur Gemischbildung bei einer direkt einspritzenden, fremdgezündeten Brennkraftmaschine, wobei in einem Brennraum einer über zumindest ein Einlassventil zugeführten Verbrennungsluft mittels einer Einspritzvorrichtung Kraftstoff zugeführt und das gebildete Kraftstoff-Luftgemisch über eine gesonderte Zündeinrichtung fremdgezündet wird.

Der Erfindung liegt die Aufgabe zugrunde, für eine direkt einspritzende, fremdgezündete Brennkraftmaschine der vorbeschriebenen Bauart ein Gemischbildungs-Verfahren aufzuzeigen, mit dem abgasseitige Rohemissionen wesentlich reduziert werden.

Diese Aufgabe ist mit dem Patentanspruch 1 dadurch gelöst, dass in die über ein betriebspunktabhängig im Öffnungshub stufenlos einstellbares Einlassventil zugemessene Verbrennungsluft entsprechend dem Grad des Öffnungshubes des Einlassventiles angepasst jeweils mengengesteuert Kraftstoff aus einer Mehrloch-Hochdruck-Einspritzdüse eingespritzt wird, wobei Kraftstoff aus einem Spritzloch der Mehrloch-Hochdruck-Einspritzdüse in Richtung eines ventilhubabhängigen Einströmspaltes zwischen Einlassventil und einer Brennraumbegrenzung abgespritzt wird.

Die Erfindung basiert auf der Kombination einer Ventiltrieb-Vorrichtung zur variablen Hubverstellung eines Einlassventils mit einer Mehrloch-Hochdruck-Einspritzdüse, die so gesteuert wird, dass Kraftstoff auf einen beim Öffnen des Einlassventiles entstehenden Einströmspalt gerichtet abgespritzt wird, wobei mit der zu Öffnungsbeginn über einen kleinen Einströmspalt mit ca. Schallgeschwindigkeit einströmenden Verbrennungsluft eine im Hinblick auf abgasseitige Rohemissionen vorteilhafte Gemischaufbereitung bewirkt wird.

Das erfindungsgemäße Gemischbildungs-Verfahren gilt nicht nur für kleine Hübe des Einlassventiles im unteren Teillastbereich, es ist auch Basis für den übrigen Betriebsbereich der Brennkraftmaschine bis in den oberen Volllastbereich hinein.

Hierfür wird in einer ersten Ausgestaltung des erfindungsgemäßen Verfahrens vorgeschlagen, dass aus einem hubgesteuert freigegebenen weiteren Spritzloch der Mehrloch-Hochdruck-Einspritzdüse Kraftstoff in einen vom weiter geöffneten Einlassventil stromab erzeugten Turbulenzbereich abgespritzt wird.

Mit dem bislang aufgezeigten Gemischbildungs-Verfahren mit einer ventilspaltseitigen Einspritzung und einer turbulenz-seitigen Einspritzung wird insbesondere der Teillastbereich der Brennkraftmaschine abgedeckt.

Für die Abdeckung des gesamten Lastbereiches einer Brennkraftmaschine wird in Weiterbildung der Erfindung vorgeschlagen, dass aus einem hubgesteuert freigegebenen zusätzlichen Spritzloch der Mehrloch-Hochdruck-Einspritzdüse Kraftstoff in eine im Brennraum oberhalb eines hubbeweglichen Kolbens initiierte Drallströmung der Verbrennungsluft abgespritzt wird.

Für die Durchführung des erfindungsgemäßen Gemischbildungs-Verfahrens bevorzugte mechanische Ventiltrieb-Vorrichtungen zur variablen Hubverstellung eines Gaswechselventils sind in den deutschen Patentanmeldungen 100 17 441 und 10123186 gezeigt und beschrieben, die auf das ältere deutsche Patent DE 42 23 172 C1 zurückgehen. Bezüglich geeigneter Mehrloch-Hochdruck-Einspritzdüsen zur Durchführung des erfindungsgemäßen Gemischbildungs-Verfahrens wird auf die deutsche Offenlegungsschrift DE 196 42 513 A1, auf die europäische Patentschrift EP 0 867 611 B1 sowie auf die japanische Patent-Offenlegungsschrift 60-150473 verwiesen.

Um ein Verkoken des hubvariabel gesteuerten Einlassventils sicher zu vermeiden, wird in weiterer Ausgestaltung der Erfindung vorgeschlagen, dass bei geringem Öffnungshub des Einlassventiles der Kraftstoff in die über diesen Öffnungsspalt zuströmende Verbrennungsluft lediglich mit einem solchen Hochdruck eingespritzt wird, dass ein Eindringen des Kraftstoffstrahles in den Öffnungs- bzw. Einströmspalt im wesentlichen vermieden wird. Diese Maßnahme gilt nicht nur für betriebspunktabhängig geringe Öffnungshübe, sondern auch für Öffnungshübe eines von Null-Hub bis zum Voll-Hub gesteuerten Einlassventiles.

Zur sicheren Erzielung einer luftverteilten Gemischbildung bei größeren Öffnungshüben des Einlassventiles wird für das erfindungsgemäße Gemischbildungs-Verfahren vorgeschlagen, dass der weitere Kraftstoff in die Verbrennungsluft jeweils mit einem gegenüber dem Hochdruck der ersten, zum Einströmspalt gerichteten Kraftstoffmenge reduzierten Druck eingespritzt werden kann.

Im weiteren kann das erfindungsgemäße Gemischbildungs-Verfahren zusätzlich vorteilhaft dadurch unterstützt werden, dass bei betriebspunktabhängig größeren Öffnungshüben das Einlassventil zunächst relativ schleichend geöffnet wird, wobei die dem Einströmspalt zugeordnete Kraftstoffmenge anteilsmäßig im wesentlichen größer ist als die übrigen Kraftstoffmengen zusammen. Mit dieser Verfahrensausgestaltung ist über den gesamten Lastbereich der Brennkraftmaschine im Bereich des Einströmspaltes mittels einer effizienten Sekundär-Zerstäubung eine vorteilhafte Gemischbildung bzw. Gemischaufbereitung erzielt, deren Umfang somit auch bei höheren Lasten der Brennkraftmaschine erheblich ist.

Das erfindungsgemäße Gemischbildungs-Verfahren ist ferner vorteilhaft dadurch unterstützt, dass eine Hubsteuerung der Mehrloch-Hochdruck-Einspritzdüse in Abhängigkeit einer Ventilhubsteuerung so gewählt wird, dass eine erste Kraftstoffmenge im Zeitbereich des Öffnungsbeginn des Einlassventiles abgespritzt wird. Damit ist sichergestellt, dass mit Beginn der Zuströmung der Verbrennungsluft über den Einströmspalt in den Brennraum Kraftstoff für eine effiziente Sekundär-Zerstäubung bereits vorhanden ist.

Um insbesondere ein lediglich im Bereich des Einströmspaltes des Einlassventils aufbereitetes Gemisch für einen Magerbetrieb der Brennkraftmaschine nutzen zu können, wird schließlich vorgeschlagen, dass das Gemisch mittels einer im Kolben ausgebildeten und relativ zu der Zündeinrichtung angeordneten Mulde derart geführt wird, dass bei einem Magerbetrieb der Brennkraftmaschine dem Bereich der Zündvorrichtung ein zündfähiger Gemischanteil vorgelagert wird.

Das erfindungsgemäße Gemischbildungs-Verfahren ist im folgenden beschrieben.

Bekanntlich wird bei einem Verfahren zur Gemischbildung für eine direkt einspritzende, fremdgezündete Brennkraftmaschine in einem Brennraum einer über zumindest ein Einlassventil, vorzugsweise über zwei Einlassventile zugeführten Verbrennungsluft mittels einer Einspritzvorrichtung Kraftstoff zugeführt und das gebildete Kraftstoff-Luftgemisch über eine gesonderte Zündeinrichtung fremdgezündet.

Zur Verbesserung des gattungsgemäßen Gemischbildungs-Verfahrens hinsichtlich reduzierter Rohemissionen wird erfindungsgemäß vorgeschlagen, dass in die über je ein betriebspunktabhängig im Öffnungshub stufenlos einstellbares Einlassventil zugemessene Verbrennungsluft entsprechend dem Grad des Öffnungshubes des jeweiligen Einlassventiles angepasst jeweils mengengesteuert Kraftstoff aus einer Mehrloch-Hochdruck-Einspritzdüse eingespritzt wird, wobei Kraftstoff jeweils aus einem oder mehreren Spritzlöchern der Mehrloch-Hochdruck-Einspritzdüse in vorzugsweise tangentialer Richtung eines ventilhubabhängigen Einströmspaltes zwischen Einlassventil und einer Brennraumbegrenzung abgespritzt wird.

Zufolge des erfindungsgemäßen Gemischbildungs-Verfahrens wird für jeden Lastpunkt der Brennkraftmaschine Kraftstoff in Richtung eines zeitweise relativ kleinen Einströmspaltes während des Öffnungshubes des Einlassventiles abgespritzt, wobei über die insbesondere mit Schallgeschwindigkeit zuströmende Verbrennungsluft eine effiziente Sekundär-Zerstäubung des Kraftstoffes erzielt ist mit der vorteilhaften Folge von reduzierten Rohemissionen im Abgas der Brennkraftmaschine.

Eine zusätzliche Sekundär-Zerstäubung erfährt die über ein erstes Spritzloch bzw. über erste Spritzlöcher der Mehrloch-Hochdruck-Einspritzdüse abgespritzte erste Kraftstoffmenge in einem stromab des geöffneten Einlassventils erzeugten Turbulenzbereich, in den lastabhängig aus einem hubgesteuert freigegebenen weiteren Spritzloch der Mehrloch-Hochdruck-Einspritzdüse zusätzlich Kraftstoff eingespritzt wird.

Die erste, einströmspalt-seitige Kraftstoffmenge und die zweite, turbulenz-seitige Kraftstoffmenge können insgesamt zur Abdeckung des Betriebes der Brennkraftmaschine im Teillastbereich festgelegt werden.

Zur Abdeckung des Volllastbereiches der Brennkraftmaschine sieht eine Weiterbildung der Erfindung vor, dass aus einem hubgesteuert freigegebenen zusätzlichen Spritzloch der Mehrloch-Hochdruck-Einspritzdüse Kraftstoff in eine im Brennraum oberhalb eines hubbeweglichen Kolbens initiierte Drallströmung der Verbrennungsluft abgespritzt wird.

Mit der ersten Kraftstoffmenge und der lastabhängig zusätzlich zweiten Kraftstoffmenge oder der zusätzlich zweiten und dritten Kraftstoffmenge ist ein Gemischbildungs-Verfahren über den gesamten Lastbereich der Brennkraftmaschine erzielt, wobei zur Erzielung eines Magerbetriebes der Brennkraftmaschine das jeweilige Gemisch mittels einer im Kolben ausgebildeten und relativ zu der Zündeinrichtung angeordneten Mulde derart geführt wird, dass bei einem Magerbetrieb der Brennkraftmaschine dem Bereich der Zündvorrichtung ein zündfähiger Gemischanteil vorgelagert wird.

Das erfindungsgemäße Gemischbildungs-Verfahren beruht auf der Kombination einer mechanischen oder elektromagnetischen Ventiltrieb-Vorrichtung zur variablen Hubverstellung eines Einlassventils mit einer Mehrloch-Einspritzdüse, wobei für die mechanische Ventiltrieb-Vorrichtung sowie für die Mehrlochdüse in der Beschreibungseinleitung Fundstellen angegeben sind.

Um ein Verkoken des Einlassventiles zu vermeiden, wird bei geringem Öffnungshub des Einlassventiles der Kraftstoff in die über diesen Öffnungsspalt zuströmende Verbrennungsluft lediglich mit einem solchen Hochdruck eingespritzt, dass ein Eindringen des Kraftstoffstrahles in den Öffnungs- bzw. Einströmspalt im wesentlichen vermieden wird.

Zur Sicherstellung einer luftverteilenden Gemischaufbereitung wird bei größeren Öffnungshüben des Einlassventiles der weitere Kraftstoff bzw. die zweite und dritte Kraftstoffmenge in die Verbrennungsluft jeweils mit einem gegenüber dem Hochdruck der ersten Kraftstoffmenge reduzierten Druck eingespritzt. Damit gegenüber den zeitlich später abgespritzten zweiten und dritten Kraftstoffmengen die erste Kraftstoffmenge im Bereich des Einströmspaltes im wesentlichen zerstäubt ist, wird die im weiteren mit reduziertem Druck abgespritzte weitere erste Kraftstoffmenge im wesentlichen im Turbulenzbereich des Einlassventils und in der Drallströmung aufbereitet.

Weiter kann das erfindungsgemäße Gemischbildungs-Verfahren im gesamten Lastbereich der Brennkraftmaschine zusätzlich dadurch unterstützt werden, dass bei betriebspunktabhängig größeren Öffnungshüben das Einlassventil zunächst relativ schleichend geöffnet wird, wobei die dem Einströmspalt zugeordnete Kraftstoffmenge anteilsmäßig größer sein kann als die übrigen Kraftstoffmengen zusammen. Mit dieser schleichenden Öffnungscharakteristik des Einlassventiles wird im Öffnungsbeginn relativ lange eine hohe Strömungsgeschwindigkeit der Verbrennungsluft nahe der Schallgeschwindigkeit erreicht, die mit dieser Maßnahme über den gesamten Drehzahl- und Lastbereich der Brennkraftmaschine vorteilhaft wirksam ist, so dass die erste, auf den Einströmspalt gerichtete Kraftstoffmenge relativ groß gewählt werden kann.

Die vorerwähnte Maßnahme wird im weiteren vorteilhaft dadurch unterstützt, dass eine Hubsteuerung der Mehrloch-Hochdruck-Einspritzdüse in Abhängigkeit einer Ventilhubsteuerung, z.B. über eine Kennfeldverknüpfung so gewählt wird, dass eine erste Kraftstoffmenge im Zeitbereich des Öffnungsbeginns des Einlassventiles abgespritzt wird, so dass die einströmende Verbrennungsluft frühzeitig zur Sekundär-Zerstäubung genutzt wird.

Eine vorteilhafte Ausgestaltung hierfür ist mit einer zwischen benachbarte Einlassventile gerichtet angeordneten Mehrloch-Hochdruck-Einspritzdüse erreicht, wenn mindestens zu jedem Einströmspalt in dessen zylinderwandseitigen Turbulenzbereich ein seitlich abgespritzter, tangentialer Kraftstoffstrahl gerichtet ist und weiter tangential zwischen die Einlassventile ein zusätzlicher Kraftstoffstrahl in einen Turbulenzbereich zwischen diametral einander gegenüberliegenden Einströmspalt-Abschnitten der Einlassventile.

## Patentansprüche

1. Verfahren zur Gemischbildung bei einer direkt einspritzenden, fremdgezündeten Brennkraftmaschine,
- wobei in einem Brennraum einer über zumindest ein Einlassventil zugeführten Verbrennungsluft mittels einer Einspritzvorrichtung Kraftstoff zugeführt wird und
- das gebildete Kraftstoff-Luft-Gemisch über eine gesonderte Zündeinrichtung fremdgezündet wird, wobei
- in die über ein betriebspunktabhängig im Öffnungshub stufenlos einstellbares Einlassventil zugemessene Verbrennungsluft entsprechend dem Grad des Öffnungshubes des Einlassventils angepasst jeweils mengengesteuert Kraftstoff aus einer Einspritzdüse eingespritzt wird,
**dadurch gekennzeichnet, dass**
die Einspritzdüse eine Mehrloch-hlochdruck-Einspritzdüse ist und der Kraftstoff aus einem Spritzloch der Einspritzdüse in Richtung eines ventilhubabhängigen Einströmspaltes zwischen Einlassventil und einer Brennraumbegrenzung abgespritzt wird.

2. Verfahren nach Anspruch 1, **dadurch gekennzeichnet, dass** aus einem hubgesteuert freigegebenen weiteren Spritzloch der Mehrloch-Hochdruck-Einspritzdüse Kraftstoff in einen vom geöffneten Einlassventil stromab erzeugten Turbulenzbereich abgespritzt wird.

3. Verfahren nach Anspruch 1 oder 2, **dadurch gekennzeichnet, dass** aus einem hubgesteuert freigegebenen zusätzlichen Spritzloch der Mehrloch-Hochdruck-Einspritzdüse Kraftstoff in eine im Brennraum oberhalb eines hubbeweglichen Kolbens initiierte Drallströmung der Verbrennungsluft abgespritzt wird.

4. Verfahren nach einem oder mehreren der Ansprüche 1 bis 3, **dadurch gekennzeichnet,**
- **dass** bei geringem Öffnungshub des Einlassventiles der Kraftstoff in die über diesen Öffnungsspalt zuströmende Verbrennungsluft lediglich mit einem solchen Hochdruck eingespritzt wird, dass
- ein Eindringen eines Kraftstoffstrahles in den Öffnungs- bzw. Einströmspalt im wesentlichen vermieden wird.

5. Verfahren nach einem oder mehreren der Ansprüche 1 bis 4, **dadurch gekennzeichnet, dass** bei größeren Öffnungshüben des Einlassventiles der weitere Kraftstoff in die Verbrennungsluft jeweils mit einem gegenüber dem Hochdruck der ersten Kraftstoffmenge reduzierten Druck eingespritzt werden kann.

6. Verfahren nach einem oder mehreren der Ansprüche 1 bis 5, **dadurch gekennzeichnet,**
- **dass** bei betriebspunktabhängig größeren Öffnungshüben das Einlassventil zunächst relativ schleichend geöffnet wird, wobei
- die dem Einströmspalt zugeordnete Kraftstoffmenge anteilsmäßig größer sein kann als die übrigen Kraftstoffmengen zusammen.

7. Verfahren nach Anspruch 6, **dadurch gekennzeichnet,**
- **dass** eine Hubsteuerung der Mehrloch-Hochdruck-Einspritzdüse in Abhängigkeit einer Ventilhubsteuerung so gewählt wird, dass
- eine erste Kraftstoffmenge im Zeitbereich des Öffnungsbeginns des Einlassventiles abgespritzt wird.

8. Verfahren nach einem oder mehreren der Ansprüche 1 bis 7, **dadurch gekennzeichnet,**
- **dass** bei mehreren stufenlos einstellbaren Einlassventilen je Brennraum jedem Einströmspalt Kraftstoff aus einem oder mehreren Spritzlöchern der Mehrloch-Hochdruck-Einspritzdüse zugeführt wird.

9. Verfahren nach einem oder mehreren der Ansprüche 1 bis 8, **dadurch gekennzeichnet,**
- **dass** der Kraftstoff in tangentialer Richtung zu einem Einlassspalt abgespritzt wird, gegebenenfalls
- über mehrere Strahlen in verschiedenen tangentialen Richtungen zu einem oder mehrere Einlassspalte.

10. Verfahren nach einem oder mehreren der Ansprüche 1 bis 9, **dadurch gekennzeichnet,**
- **dass** das Gemisch mittels einer im Kolben ausgebildeten und relativ zu der Zündeinrichtung angeordneten Mulde derart geführt wird, **dass**
- bei einem Magerbetrieb der Brennkraftmaschine dem Bereich der Zündvorrichtung ein zündfähiger Gemischanteil vorgelagert wird.

## Claims

1. A method of forming the mixture for a direct-injection externally ignited internal combustion engine,
- wherein fuel is supplied by an injection device in combustion air supplied via at least one inlet valve to a combustion chamber, and
- the resulting air-fuel mixture is externally ignited via a second ignition device, wherein
- controlled amounts of fuel, adapted to the extent to which the inlet valve is opened, are injected from an injection nozzle into the injection air, which is metered by an inlet valve steplessly adjustable in the opening stroke in dependence on the operating point,
**characterised in that** the injection nozzle is a high-pressure multi-port injection nozzle and the fuel is injected from an orifice of the injection nozzle towards an inflow gap, depending on the valve stroke, between the inlet valve and a combustion-chamber boundary.

2. A method according to claim 1, **characterised in that** fuel is injected from an additional orifice of the high-pressure multi-port injection nozzle, opened under control of the stroke, into a turbulence region generated downstream of the opened inlet valve.

3. A method according to claim 1 or 2, **characterised in that** fuel is injected from an additional orifice of the high-pressure multi-port injection nozzle, opened under the control of the stroke, into a swirl flow of the combustion air initiated in the combustion chamber above a piston movable in a stroke.

4. A method according to one or more of claims 1 to 3, **characterised in that**
- when the opening stroke of the inlet valve is short, the fuel is injected into the combustion air flowing in through the opening gap, only at a high pressure such that
- penetration of a fuel jet into the opening or inflow gap is substantially avoided.

5. A method according to one or more of claims 1 to 4, **characterised in that** when the opening strokes of the inlet valve are longer, the additional fuel is injected into the combustion air at a reduced pressure relative to the high pressure of the first amount of fuel.

6. A method according to one or more of claims 1 to 5, **characterised in that** at longer opening strokes, depending on the operating point, the inlet valve is first opened relatively slowly, wherein
- the amount of fuel associated with the inflow gap can be greater than the other quantities of fuel together.

7. A method according to claim 6, **characterised in that** control of the stroke of the high-pressure multi-port injection nozzle, in dependence on control of the valve stroke, is chosen so that a first amount of fuel is injected during the beginning of opening of the inlet valve.

8. A method according to one or more of claims 1 to 7, **characterised in that** if there are a number of steplessly adjustable inlet valves per combustion chamber, fuel is supplied to each inflow gap from one or more orifices of the high-pressure multi-port injection nozzle.

9. A method according to one or more of claims 1 to 8, **characterised in that**
- the fuel is injected tangentially into an inlet gap, or optionally a number of jets in different tangential directions are injected into one or more inlet gaps.

10. A method according to one or more of claims 1 to 9, **characterised in that** the mixture is guided by a cavity in the piston and disposed relatively to the ignition device so that when the engine is operating on a lean mixture, an ignitable portion of the mixture is stored in front of the ignition device.

## Revendications

1. Procédé de préparation de mélange dans un moteur à combustion interne à injection directe et allumage commandé, selon lequel :
- dans la chambre de combustion contenant de l'air de combustion amené à travers au moins une soupape d'admission, du carburant est introduit par un dispositif d'injection,
- le mélange carburant-air ainsi formé est enflammé par un dispositif d'allumage,
- dans l'air de combustion dosé par une soupape d'admission dont la course d'ouverture est réglable en continu en fonction du point de fonctionnement, du carburant est introduit par l'injecteur en une quantité commandée qui est chaque fois adaptée au degré de la course d'ouverture de la soupape,
**caractérisé en ce que**
l'injecteur est à haute pression et plusieurs trous, et le carburant sortant d'un trou d'injection est projeté en direction d'une fente d'entrée dépendant de la course de la soupape d'admission, entre cette soupape et une limite de la chambre de combustion.

2. Procédé selon la revendication 1,
**caractérisé en ce que**
par un autre trou d'injection, libéré par commande en fonction de la course, l'injecteur à haute pression et à plusieurs trous envoie du carburant dans une zone de turbulence produite en aval de la soupape d'admission.

3. Procédé selon la revendication 1 ou 2,
**caractérisé en ce que**
par un trou d'injection supplémentaire, libéré par commande en fonction de la course, l'injecteur à haute pression et plusieurs trous envoie du carburant dans un courant tournant d'air de combustion, initié au-dessus du piston mobile.

4. Procédé selon l'une des revendications 1 à 3,
**caractérisé en ce que**
quand la course d'ouverture de la soupape d'admission est faible, le carburant est injecté dans l'air de combustion pénétrant à travers la fente d'entrée à une pression telle que le jet de carburant ne peut pratiquement pas traverser la fente d'entrée.

5. Procédé selon l'une des revendications 1 à 4,
**caractérisé en ce que**
quand la course d'ouverture de la soupape d'admission est assez grande, du carburant supplémentaire est injecté dans l'air de combustion à une pression réduite par rapport à celle de la première injection.

6. Procédé selon une ou plusieurs des revendications 1 à 5,
**caractérisé en ce que**
pour des courses d'ouverture assez grandes, en fonction du point de fonctionnement la soupape d'admission est d'abord ouverte avec une progression relativement faible de sorte que la quantité de carburant associée à la fente d'entrée peut être proportionnellement supérieure à l'ensemble des autres quantités de carburant.

7. Procédé selon la revendication 6,
**caractérisé en ce que**
la commande de la course de l'injecteur à haute pression et à plusieurs trous s'effectue en fonction de la commande de la course de la soupape de manière qu'une première quantité de carburant est injectée pendant le début de l'ouverture de la soupape d'admission.

8. Procédé selon l'une ou plusieurs des revendications 1 à 7,
**caractérisé en ce qu'**
avec, pour chaque chambre de combustion, plusieurs soupapes d'admission réglables en continu, du carburant issu d'un ou plusieurs trous de l'injecteur est envoyé dans chaque fente d'entrée.

9. Procédé selon l'une des revendications 1 à 8,
**caractérisé en ce que**
le carburant est envoyé en direction tangentielle à une fente d'entrée, et éventuellement plusieurs jets sont envoyés selon différentes directions tangentielles à une ou plusieurs fentes d'entrée.

10. Procédé selon l'une des revendications 1 à 9,
**caractérisé en ce que**
le mélange est conduit par l'intermédiaire d'une cuvette réalisée dans le piston et positionnée par rapport au dispositif d'allumage de manière qu'une fraction de mélange inflammable est d'abord disponible dans la zone du dispositif d'allumage quand le moteur fonctionne en régime maigre.
